# EUROPÄISCHE PATENTSCHRIFT

(11) **EP 1 180 586 B1**
(45) Veröffentlichungstag und Bekanntmachung des Hinweises auf die Patenterteilung: **24.03.2004**
(21) Anmeldenummer: 01117261.6
(22) Anmeldetag: 17.07.2001
(51) Int. Cl.: F01N 3/20, F01N 3/08

(54) **Mehrzylinder-Brennkraftmaschine mit einer Vorrichtung zum Katalysator-Heizen**
Multi-cylinder internal combustion engine with a catalyst heating device
Moteur à combustion interne multicylindres comportant un dispositif pour chauffer un catalyseur

(30) Priorität: 18.08.2000 DE 10040515
(43) Veröffentlichungstag der Anmeldung: 20.02.2002
(73) Patentinhaber: Bayerische Motoren Werke Aktiengesellschaft, 80809 München (DE)
(72) Erfinder: Ramatschi, Stephan, 85604 Zorneding (DE); Müller, Peter, 81673 München (DE); Detterbeck, Stefan, 80804 München (DE); Preuss, Florian, 80809 München (DE); Hasenclever, Hanns-Christian, Dr., 80809 München (DE)

(56) Entgegenhaltungen:
- EP-A- 0 980 965
- DE-A- 4 106 249
- JP-A- 10 220 310
- JP-A- 11 062 563
- US-A- 3 943 710
- US-A- 5 802 845
- US-A- 6 047 542

## Beschreibung

Die Erfindung bezieht sich auf eine Mehrzylinder-Brennkraftmaschine mit einer Vorrichtung insbesondere zur Desulfatisierung von NOx-Speicherkatalysatoren durch Katalysator- Heizen.

Für die Abgasnachbehandlung von saugrohr- und direkteinspritzenden Otto-Brennkraftmaschinen, die mit einem Luft-Kraftstoffverhältnis Lambda >1 bzw. mager betrieben werden, kommen NOₓ-Speicherkatalysatoren zum Einsatz. Diese Katalysatoren werden durch den im Kraftstoff enthaltenen Schwefel im Verlauf ihres Betriebes zunehmend vergiftet. Damit wird eine Entschwefelung des Katalysators notwendig, da sich ansonsten der Katalysatorwirkungsgrad bezüglich NOₓ bis zu unzulässigen Werten verringert. Für die Entschwefelung muss der Katalysator mit einer Mindesttemperatur von ca. 650° und einer fetten Abgaszusammensetzung (Lambda <1) beaufschlagt werden. Diese Bedingungen können z.B. während einer Autobahnfahrt erreicht werden. Wird das Fahrzeug allerdings nur in niedrigen Lasten bewegt, beispielsweise nur im Stadtverkehr, werden die Desulfatisierungsbedingungen nicht erreicht. In diesem Fall können die Bedingungen künstlich über die Motorsteuerung erzeugt werden, beispielsweise mittels Zündwinkelspätverstellung, Doppeleinspritzung und durch die sog. Bankvertrimmung, wie sie beispielsweise im Prinzip in der DE 195 06 980 C2 beschrieben ist.

Einen weiteren Anwendungsfall für die Notwendigkeit von Katalysator-Heizmaßnahmen stellt das sog. "Kat-Ausgehen" im Betrieb dar. Unter Betriebsbedingungen, in denen sehr geringe Abgastemperaturen vorliegen, wie Leerlauf, Niedriglast, kann der Katalysator unter seine Aktivitätstemperatur abfallen, was zu unzulässig hohen Endemissionen führt.

Die Bankvertrimmung ist eine wirkungsvolle Katalysator-Heizmaßnahme. Das Prinzip beruht auf der Tatsache, dass vor einem Unterbodenkatalysator z.B. ein NOₓ-Speicherkat fettes Abgas (Lambda <1) mit magerem Abgas (Lambda >1) zusammengeführt wird. Bei einem Vier-Zylindermotor mit einer Y-Abgasanlage wird dazu eine Bank fett betrieben (HC- und CO-Lieferant für den Unterbodenkat), während die andere Bank mager betrieben wird (Sauerstofflieferant für den NOₓ-Unterbodenkat). Eine Brennkraftmaschine mit Y-Abgasanlage ist aus der DE 198 52 294 A1 bekannt.

Die Bankvertrimmung wird jedenfalls so ausgelegt, dass sich vor dem jeweiligen Katalysator annähernd ein stöchiometrisches Gemisch einstellt. Die exothermen Reaktionen im Katalysator führen zu einer starken Erwärmung des NOₓ-Speicherkatalysators ohne dass die Abgasrohre vor diesem Speicherkatalysator erwärmt werden müssen.

Bei einer mehrflutigen Abgasanlage, wie sie bei großvolumigen Brennkraftmaschinen zum Einsatz kommt, werden jeweils ein Speicherkat und eine Vorkatalysator mit dem Abgas einer Bank beaufschlagt. Damit besteht in nachteiliger Weise kaum mehr die Möglichkeit, den Speicherkat durch die Heizmaßnahme mittels "Bankvertrimmung" zu heizen. Zwar könnte eine Zylindervertrimmung innerhalb einer Bank zum Heizen des Vorkatalysators genutzt werden und die im Vorkatalysator entstehende Wärme könnte den nachfolgenden Speicherkat heizen. Allerdings ist dies mit einem nachteilig niedrigen Wirkungsgrad verbunden, wobei der Vorkatalysator ferner wegen Überhitzung beschädigt/zerstört werden kann. Das bedarfsweise Heizen von entfernt von der jeweiligen Brennkraftmaschine angeordneten Speicherkatalysatoren wird insbesondere bei großvolumigen Motoren noch durch den Umstand verschärft, dass aufgrund des niedrigen Lastkollektivs im Kundenbetrieb ein wesentlich häufigerer Heizbedarf besteht als bei hubraumkleinen Motoren bzw. Brennkraftmaschinen.

Aus der US 6,047,542 ist eine Mehrzylinder-Brennkraftmaschine bekannt, die wechselweise fett und mager betreibbare erst und zweite Zylindergruppen umfasst mit je einer abschnittsweise gesonderten Abgasleitung mit je einem motornah und einem motorfern angeordneten Katalysator. Weitere Katalysatoren sind in einem den gesonderten Abgasleitungen nachgeschalteten gemeinsamen Leitungsstrang installiert.
Die erste Zylindergruppe ist vorzugsweise fett betrieben für einen in der ersten Abgasleitung motornah angeordneten Dreiwege-Kat zur Erzeugung von Ammoniak-NH3-, das in derselben Abgasleitung einem NH3- Kat zuführbar ist. Die zweite Zylindergruppe ist demgegenüber vorzugsweise mager betrieben für einen in der zweiten Abgasleitung motornah angeordneten ersten NOx- Speicherkat, dem in derselben Abgasleitung motorfern ein zweiter NOx- Speicherkat zugeordnet ist.
Beide Abgasleitungen sind zwischen den motornahen und den motorfemen Gruppen von unterschiedlichen Katalysatoren mittels mehrerer klappengesteuerter Verbindungsleitungen verbindbar zur Steigerung einer NOx-Konversion bei verstärkter Ammoniakbildung. Zur Umwandlung des NH3 sind in dem gemeinsamen Leitungsstrang entsprechende Katalysatoren vorgesehen.

Der Erfindung liegt die Aufgabe zugrunde, für eine Mehrzylinder-Brennkraftmaschine mit zwei Zylindergruppen eine Vorrichtung zum Katalysator-Heizen derart weiterzubilden, dass mit einfachen Mitteln ein sicheres Heizen von entfernt der Brennkraftmaschine angeordneten NOx-Speicherkatalysatoren insbesondere zum Desulfatieren erzielt ist bei gleichzeitiger Erzeugung gleicher Drehmomente in beiden Zylindergruppen.

Diese Aufgabe ist mit dem unabhängigen Anspruch gelöst.

Mit der Erfindung können insbesondere im Unterbodenbereich eines Fahrzeuges von der Brennkraftmaschine besonders entfernt angeordnete NOx-Speicherkatalysatoren vor allem zur sicheren Desulfatisierung gezielt aufgeheizt werden. Im Normalbetrieb der Brennkraftmaschine ist die Klappe in der Verbindungsleitung geschlossen. Sobald von der Motorsteuerung eine Aufheizung der beiden Speicherkatalysatoren im Unterboden z.B. für eine Desulfatisierung angefordert wird, werden die beiden Bänke der Brennkraftmaschine mit verschiedenen Luft-Kraftstoffgemischen betrieben. Eine Zylindergruppe bzw. Bank wird mager (Lambda >1) betrieben, die andere Zylindergruppe bzw. Bank fett (Lambda <1). Um im wesentlichen das gleiche Drehmoment auf beiden Bänken bzw. Zylindergruppen zu erzeugen, wird die fette Zylindergruppe bzw. Bank stärker angedrosselt als die magere. Durch den unterschiedlichen Betrieb der beiden Zylindergruppen ergeben sich unterschiedliche Luftdurchsätze, in deren Folge vor dem Speicherkatalysator in dem Abgasstrang der mageren Bank ein höherer Gegendruck entsteht als vor dem Speicherkatalysator der fetten Bank. Erfindungsgemäß wird bei diesem Betrieb das Schließorgan der Verbindungsleitung geöffnet, so dass zusätzlich sauerstoffhaltiges Abgas dem Speicherkatalysator im fetten Strang zuströmt. Durch exotherme Reaktionen im Speicherkatalysator wird dieser z.B. auf eine Desulfatisierungs-Temperatur gebracht. Während der Desulfatisierung wird das vor diesem Speicherkatalysator anliegende Abgas so angereichert, dass in Summe Lambda <1-Bedingungen herrschen zum Austreiben des Schwefels aus dem Speicherkatalysator. Ist die Desulfatisierung des einen Speicherkatalysators abgeschlossen, wird die Vorgehensweise analog für den zweiten Speicherkatalysator durchgeführt, wobei die Zylindergruppe umgekehrt mager und fett betrieben werden. Sind beide Speicherkatalysatoren ausreichend desulfatisiert, wird das Schließorgan in der Verbindungsleitung wieder geschlossen.

Die erfindungsgemäße Heizmaßnahme schont in vorteilhafter Weise die motornahen Katalysatoren, da die Heiz-Temperatur direkt im NOₓ-Speicherkatalysator erzeugt ist. Außerdem ist sie hinsichtlich Verbrauch und Fahrverhalten besonders vorteilhaft.

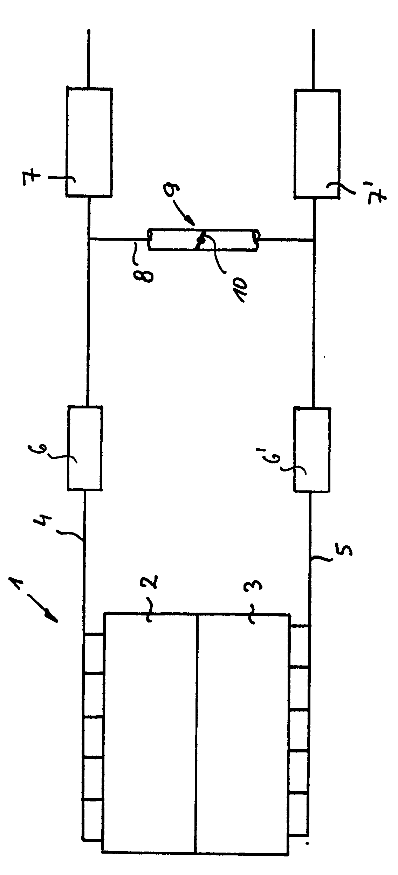

Die Erfindung ist anhand einer in der Zeichnung schematisch dargestellten Mehrzylinder-Brennkraftmaschine beschrieben.

Eine als V-Motor mit großem Hubraum ausgebildete Brennkraftmaschine 1 umfasst für eine nicht einzeln dargestellte Vorrichtung zum Katalysator-Heizen eine nicht gezeigte Gemischbildungseinrichtung zur heizgesteuerten/heizgeregelten wechselweisen Erzeugung fetten Abgases in einer ersten Zylindergruppe 2 und mageren Abgases in einer zweiten Zylindergruppe 3, wobei jede Zylindergruppe 2, 3 mit einer gesonderten Abgasleitung 4, 5 mit einem relativ motornahen Katalysator 6, 6' und einem stromab motorfemen angeordneten NOₓ-Speicherkatalysator 7, 7' ausgerüstet ist. Zwischen beiden Abgasleitungen 4 und 5 ist stromauf der NOₓ-Speicherkatalysatoren 7 und 7' eine steuerbare Verbindungsleitung 8 angeordnet, deren Schließorgan 9 zum Heizen des jeweiligen, über die zugeordnete Abgasleitung mit fettem Abgas beaufschlagten NOₓ-Speicherkatalysators 7, 7' offengesteuert ist bei luftansaugseitig gedrosselter Zylindergruppe 2 bzw. 3 mit fettem Abgas.

Als motomahe Katalysatoren 6 und 6' sind vorzugsweise Dreiwege-Katalysatoren gewählt.

Das Schließorgan 9 der Verbindungsleitung 8 ist zur Erzielung eines einfachen Aufbaues bzw. eines einfachen Mittels als Klappe 10 ausgebildet.

Um das in der jeweiligen Zylindergruppe bzw. Bank 2 oder 3 bei fettem Abgas anstehende erhöhte Drehmoment gegenüber der Zylindergruppe 3 bzw. 2 mit magerem Abgas zu reduzieren, sind die beiden Zylindergruppen 2 und 3 luftansaugseitig mit getrennt steuerbaren Drosselorganen ausgerüstet. Eine Drosselung der Luftansaugluft für die Zylindergruppe 2 oder 3 bei fettem Abgas kann auch dadurch erreicht sein, dass hubvariable Einlassventile vorgesehen sind. Im übrigen können beide vorgenannten Einrichtungen auch gemeinsam vorgesehen sein.

Abschließend wird noch darauf hingewiesen, dass die Erfindung in der Kombination aller im Patentanspruch 1 angegebenen Merkmale gesehen wird und nicht in einer zwei Abgasleitungen einer Brennkraftmaschine miteinander gesteuert verbindenden Verbindungsleitung, wie dies per se z.B. aus der DE 28 52 736 A1 bekannt ist.

## Patentansprüche

1. Mehrzylinder - Brennkraftmaschine mit einer Vorrichtung insbesondere zur Desulfatisierung von NOx - Speicherkatalysatoren durch Kat - Heizen,
- die eine Gemischbildungseinrichtung zur heizgesteuerten / heizgeregelten wechselweisen Erzeugung fetten Abgases in einer ersten Zylindergruppe (2) und mageren Abgases in einer zweiten Zylindergruppe (3) umfasst, und
- jede Zylindergruppe (2,3) mit einer gesonderten Abgasleitung (4,5) mit einem relativ motomahen Dreiwege - Katalysator (6,6') und einem stromab motor - femen NOx - Speicherkatalysator (7,7') ausgerüstet ist, und weiter
- zwischen beiden Abgasleitungen (4,5) stromauf der motorfemen NOx - Speicherkatalysatoren (7,7') eine mittels einer Klappe (10) steuerbare Verbindungsleitung (8) angeordnet ist, dass ferner
- beide Zylindergruppen (2,3) luftansaugseitig mit getrennt steuerbaren Drosselorganen ausgerüstet sind zur Erzielung jeweils unterschiedlicher Luftdurchsätze derart,
- dass die jeweilige Zylindergruppe (2,3) mit fettem Abgas gegenüber der anderen Zylindergruppe (3,2) mit magerem Abgas zur Drehmomentreduzierung stärker angedrosselt ist, und
- dass über den in der jeweiligen Abgasleitung (4,5) mit magerem Abgas luft-durchsatzbedingt höheren Gegendruck die Klappe (10) der Verbindungsleitung (8) gesteuert geöffnet ist für ein im wesentlichen stöchiometrisches Gemisch aus fettem und magerem Abgas zum Heizen mittels exothermer Reaktionen in dem mit der jeweiligen Abgasleitung (4,5) mit fettem Abgas verbundenen NOx - Speicherkatalysator (7,7').

2. Brennkraftmaschine nach Anspruch 1, **dadurch gekennzeichnet,**
- **dass** das fette Abgas während der Desulfatisierung auf einen Wert λ< 1 gesteuert ist.

3. Brennkraftmaschine nach Anspruch 1 oder 2, **dadurch gekennzeichnet,**
- **dass** die beiden Zylindergruppen (2,3) luftansaugseitig mittels hubvariablen Einlassventilen drosselbar sind.

4. Brennkraftmaschine nach einem der Ansprüche 1 - 3, **gekennzeichnet durch** die Verwendung der Vorrichtung bei großem Hubvolumen, insbesondere V - Motor (1).

## Claims

1. A multicylinder internal combustion engine comprising a device particularly for desulphating NOx storage catalysts by heating the catalyst,
- the device comprising a mixture-forming means for alternately producing rich exhaust gas in a first group (2) of cylinders and lean exhaust gas in a second group (3) of cylinders by heating under closed-loop or open-loop control and
- each cylinder group (2, 3) is equipped with a separate exhaust pipe (4, 5) with a three-way catalyst (6, 6') relatively near the engine and a downstream NOx storage catalyst (7, 7') remote from the engine,
- a connecting pipe (8) controllable by a valve (10) is disposed between the two exhaust pipes (4, 5) upstream of the NOx storage catalysts (7, 7') remote from the engine,
- both groups of cylinders (2, 3) are equipped on the air suction side with separately controllable throttle means to obtain different air flow rates so that
- in order to reduce the torque, the respective cylinder group (2, 3) with rich exhaust gas is throttled more strongly than the other group (3, 2) with lean exhaust gas and
- as a result of the higher counterpressure due to the flow rate in the exhaust pipe (4, 5) with lean gas, the valve (10) in the connecting pipe (8) is opened in controlled manner to obtain a substantially stoichiometric mixture of rich and lean exhaust gas for heating by exothermic reactions in the NOx storage catalyst (7, 7') connected to the respective exhaust pipe (4, 5) with rich exhaust gas.

2. An engine according to claim 1, **characterised in that** the rich exhaust gas is kept at a value λ<1 during desulphation.

3. An engine according to claim 1 or 2, **characterised in that** both cylinder groups (2, 3) can be throttled on the air intake side by inlet valves variable by the stroke.

4. An engine according to any of claims 1 to 3, **characterised by** use of the device at high piston capacity, especially in V-engines (1).

## Revendications

1. Moteur à combustion interne multicylindres comprenant un dispositif notamment pour la désulfuration de catalyseurs accumulateurs de NOx par chauffage de catalyseur,
- comprenant une installation de formation de mélange pour générer en alternance par commande/régulation de chauffage des gaz d'échappement riches dans un premier groupe de cylindres (2) et des gaz d'échappement maigres dans un deuxième groupe de cylindres (3), et
- chaque groupe de cylindres (2, 3) étant muni d'une conduite de gaz d'échappement (4, 5) séparée présentant un catalyseur à trois voies (6, 6') disposé relativement près du moteur et un catalyseur accumulateur de NOx (7, 7') disposé en aval éloigné du moteur, et
- avec entre les deux conduites de gaz d'échappement (4, 5), en amont des catalyseurs accumulateurs de NOx (7, 7') éloigné du moteur, une conduite de liaison (8) asservie par un clapet (10)
- les deux groupes de cylindres (2, 3) étant munis côté aspiration d'air d'organes d'étranglement pouvant être commandés séparément pour obtenir des débits d'air respectivement différents, de telle sorte
- le groupe de cylindres (2, 3) respectif avec des gaz d'échappement riches est davantage étranglé que l'autre groupe de cylindres (3, 2) avec des gaz d'échappement maigres pour réduire le couple de rotation, et
- par la contre-pression plus élevée en raison du débit d'air dans la conduite de gaz d'échappement (4, 5) ayant des gaz d'échappement maigres, le clapet (10) de la conduite de liaison (8) est ouvert de manière commandée pour un mélange essentiellement stoechiométrique de gaz d'échappement riches et maigre, pour chauffer au moyen de réactions exothermes le catalyseur accumulateur de NOx (7, 7') relié à la conduite de gaz d'échappement (4, 5) respective ayant les gaz d'échappement riches.

2. Moteur à combustion interne selon la revendication 1,
**caractérisé en ce que**
pendant la désulfuration, les gaz d'échappement riches sont réglés sur une valeur λ > 1.

3. Moteur à combustion interne selon la revendication 1 ou 2,
**caractérisé en ce que**
côté aspiration d'air, les deux groupes de cylindres (2, 3) peuvent être étranglés au moyen de soupapes d'admission à course variable.

4. Moteur à combustion interne selon l'une des revendications 1 - 3,
**caractérisé par**
l'utilisation du dispositif en présence d'une grande cylindrée, notamment d'un moteur en V (1).
